# EUROPEAN PATENT SPECIFICATION

(11) **EP 2 760 566 B1**
(45) Date of publication and mention of the grant of the patent: **02.03.2016**
(21) Application number: 12762630.7
(22) Date of filing: 27.09.2012
(51) Int. Cl.: B01D 53/86, C01B 17/74, C01B 17/765, C01B 17/80, C01B 17/90, C01B 17/76

(54) **SULPHURIC ACID PRODUCTION WITH RECYCLE OF DESULPHURIZED GAS**
SCHWEFELSÄUREHERSTELLUNG MIT RECYCLING VON ENTSCHWEFELTEM GAS
PRODUCTION D'ACIDE SULFURIQUE AVEC RECYCLAGE DE GAZ DÉSULFURÉ

(30) Priority: 29.09.2011 WO PCT/EP2011/004860
(43) Date of publication of application: 06.08.2014
(73) Proprietor: Haldor Topsøe A/S, 2800 Kgs. Lyngby (DK)
(72) Inventor: LYKKE, Mads, DK-2700 Brønshøj (DK)
(74) Representative: Haldor Topsøe A/S
(86) International application number: PCT/EP2012/069099
(87) International publication number: WO 2013/045558

(56) References cited:
- EP-A1- 0 972 746
- EP-A1- 2 330 075
- EP-A2- 2 163 515
- DE-A1- 3 534 060

## Description

The present invention relates to a method for production of sulphuric acid by desulphurisation of an SO₂ rich process gas, including feed gases from combustion of a sulphur source such as H₂S, sulphur and spent acid, and flue gases from combustion plants. More specifically it relates to a process with reduced equipment requirements involving recycle of the desulphurised process gas.

Sulphuric acid can be produced from gases containing sulphur oxides. One such process is based on the oxidation of SO₂ to SO₃ in the presence of water vapour, followed by condensation to H₂SO₄, and is sold under the trade name WSA (the Wet gas Sulphuric Acid) by the company Haldor Topsøe A/S of Denmark. The source of sulphur may either be an offgas with high sulphur content, or more typically, a gas produced by combustion of a sulphur rich source, such as elemental sulphur or hydrogen sulfide.

With increasing environmental concern, the regulations of sulphur oxide emissions to very low concentrations has led to the development of two WSA process plants configured in series as disclosed in WO 2008/064698, hence the trade name WSA-DC for dual condensation.

The WSA process operates with water concentrations in the process gas close to or above stoichiometric concentrations with respect to SO₃ hydration. Therefore, the ability to control condensation of sulphuric acid is critical, as sulphuric acid is very corrosive. Condensation of sulphuric acid occurs if the gas temperature is below the sulphuric acid dew point, which is a function of partial pressures of sulphuric acid and water. The conditions in the WSA process downstream catalytic oxidation are typically chosen for obtaining a given dew point of H₂SO₄, such that condensation of H₂SO₄ only occurs inside the condensation unit. With SO₃ concentrations in the oxidized process gas above about 5% by volume this typically requires dilution of the oxidized process gas, which is provided by adding excess air, compared to the stoichiometric requirements for oxidation of sulphur compounds to sulphur trioxide. This excess air will lead to an excess flow of process gas and therefore to extra cost and reduced heat recovery.

The material cost and operational cost of the desulphurisation process is increased with increased total molar flow in the plant. Therefore, it is desirable to identify ways of reducing this flow. Furthermore, the amount of heat recovered in the desulphurisation plant is also an important economical factor for the plant.

For catalytic oxidation of SO₂ it is required that the temperature of the process gas is at least 370°C at the inlet to the SO₂ converter. This can be obtained e.g. by tempering the process gas upstream the catalytic reactor in which the SO₂ is oxidized to SO₃. The exothermal reaction typically requires temperatures above 370 to 390°C for activation, but temperatures above this pushes on the other hand the equilibrium between SO₂ and SO₃ towards SO₂ such that less sulphuric acid is formed.

Downstream the catalytic reactor the SO₃-rich gas is cooled to 230-310°C and the SO₃ is hydrated to H₂SO₄ vapour in or upstream a condenser in which the H₂SO₄ vapour and most of the SO₃ is selectively condensed as concentrated sulphuric acid.

WO 2008/064698 relates to a process for producing sulphuric acid from feed gases implemented as a dual desulphurisation process, which employs two WSA process plants in series, with the associated benefit of being able to operate each combined process optimally at high and low SO₂ levels, respectively.

EP 0 972 746 and EP 2 330 075 relates to processes for production of sulfuric acid, by the so called dry contact process, in which a dried waste gas is recycled to the sulphur burner. According to the dry contact process, SO₂ is oxidized to SO₃ in a dry environment followed by absorption of SO₃ by contacting the gas with a water/sulphuric acid absorbent, with the associated benefit of fewer demands to the robustness of catalyst and with flexibility for the heat exchanger designs due to the absence of condensable sulphuric acid, but at the expense of requiring equipment for drying the feed gas prior to oxidation. A sulphur depleted gas is recycled for being fed upstream a sulphur combustion unit, in order to control the combustion temperature, increase sulphur removal and reduce equipment size. Neither of these two disclosures realize the important relations between dilution by recycled gas and the dew point of a gas comprising water, sulphur trioxide and sulphuric acid.

The present disclosure is aimed at reducing the investment and operational cost of a dual desulphurisation plant by reducing the molar flow of process gas in selected sections of the WSA plant. This is done by configuring the desulphurisation plant for recycle of a substream of a first desulphurised process gas, such that the first desulphurisation process operates with sufficient dilution for avoiding sulphuric acid condensation outside the condenser, while the remainder of the desulphurisation process in which less or no dilution is required due to the lower concentrations of SO₃ may be reduced in size due to the absence of the recycled gas in the flow. Similarly the size of the sulphur combustor and other equipment upstream the addition of recycled desulphurized gas may be reduced. This also reduces the amount of energy required for heating the feed gas to the second catalytic reactor.

Sections of the present application relates to a process having two desulphurisation steps. In this respect, the terms upstream or first desulphurisation process or desulphurisation unit shall be understood as related to one desulphurisation steps being most proximate to the feed gas, and downstream, second or secondary to the other desulphurisation step being most proximate to the stack.

Throughout the present text, trivial but critical elements such as pumps, valves and heat exchangers may not be mentioned explicitly, but such an omission shall not be construed as an absence of the elements, unless explicitly mentioned as such.

In a first embodiment the invention relates to a process for oxidation of SO₂ to SO₃ comprising the steps of,
(a) directing a stream of feed gas comprising SO₂ and O₂ to a catalytically active material,
(b) oxidizing an amount of said SO₂ in said process gas to SO₃ in the presence of at least 0.1% water and the catalytically active material, providing a first oxidized process gas
(c) reacting SO₃ with water,
(d) condensing H₂SO₄
(e) withdrawing a first desulphurized process gas and a first stream of sulphuric acid
(f) from the desulphurized process gas withdrawing a recycle stream of desulphurized process gas, wherein the recycle stream is added to said stream of feed gas or said first oxidized process gas with the associated benefit of reducing the molar flow of process gas downstream withdrawal of the recycle stream, and upstream the mixing point, with the associated benefit of removing SO₂ from a flue gas as sulphuric acid, without having to dry the process gas and subsequently add water to the gas, while maintaining non-corrosive conditions in all of the process plant.

In a further embodiment the process further comprises the secondary sulphur removal process steps of
(g) reheating the first desulphurized process gas,
(h) oxidizing an amount of the remaining SO₂ in said first desulphurized process gas to SO₃ in the presence of a second catalytically active material providing a second oxidized process gas
(i) reacting SO₃ with water,
(j) condensing H₂SO₄
(k) and withdrawing a second desulphurized process gas and a second stream of sulphuric acid with the associated benefit of further reducing the concentration of SO₂ in the process gas.

In a further embodiment the process further comprises the process step of (1) heating the recycle stream of desulphurized process gas to a temperature above the dew point of sulphuric acid in the desulphurized flue gas with the associated benefit of reducing the risk of condensation of corrosive sulphuric acid, after mixing with the process gas.

In a further embodiment the temperature of the recycle stream is at least 10°C, preferably at least 30°C and even more preferable at least 50°C above the dew point with respect to sulphuric acid with the associated benefit of reducing the risk of corrosion by ensuring ample margin to the dew point of sulphuric acid.

A further embodiment involves one or more secondary sulphur removal process steps taken from the group consisting of (m) removal of sulphuric acid mist by collection of droplets in a mist filter and withdrawal of collected sulphuric acid droplets,
(n) removal of sulphuric acid mist by electrostatic precipitation, and removal of precipitated sulphuric acid (o) removal of sulphur oxides by absorption in a scrubber, wherein said scrubber contains an alkaline solution and/or an oxidative solution with the associated benefit of providing the optimal means for reduction of SOₓ concentrations in the clean gas according to specific process requirements.

In a further embodiment the recycle stream is withdrawn downstream the secondary sulphur removal process step with the associated benefit of a reduced molar flow upstream the desulphurisation process, while high dilution is maintained in all of the desulphurisation plant.

In a further embodiment the recycle stream is withdrawn downstream the secondary sulphur removal process step with the associated benefit of a reduced molar flow upstream the desulphurisation process and in the secondary sulphur removal process.

In a further embodiment the concentration of SO₂ in the SO₂ rich gas is in the range 5-100% vol, preferably 5-30% vol, allowing maximum benefit from removal of sulphur oxides in two independent processes in series.

In a further embodiment at least 99% of the sulfur comprised in the feed gas is in oxidised form such as SO₂ or SO₃ or the corresponding acids, with the associated benefit of the substantially all of the sulphur being condensable as acid in the process.

In a further embodiment less than 50% of said desulphurized process gas is withdrawn as a recycle stream of desulphurized process gas, with the associated benefit of avoiding a built up of inert gases, such as nitrogen and argon.

In a further embodiment the volumetric concentration of oxygen in said process gas being directed to contact the catalytically active material is at least the same as the volumetric concentration of sulphur dioxide, with the associated benefit of providing an efficient oxidation process with fast reaction due to the excess of oxygen.

In a further embodiment the temperature of said recycled gas is above 200°C, with the associated benefit of the recycled gas being maintained non-corrosive, even in the presence of water and sulphur oxides.

A further aspect of the invention, relates to a process plant for desulphurisation of a feed gas comprising a first bed of catalytically active material, a first condensation unit and a downstream desulphurisation plant configured for recycling of a stream being withdrawn downstream said first condensation unit and optionally downstream the downstream desulphurisation unit and being recycled to a process position upstream the first condensation unit, and optionally upstream said first bed of catalytically active material, with the associated benefit of reducing the molar flow of process gas downstream withdrawal of the recycle stream, with the associated benefit of providing a plant for removing SO₂ from a flue gas as sulphuric acid, without having to dry the process gas, while maintaining non-corrosive conditions in all of the process plant.

A further embodiment involves one or more additional sulphur removal process units downstream the desulphurisation plant taken from the group consisting of (i) a process unit comprising a catalytic material for oxidation of SO₂ to SO₃ and a condenser for condensation of sulphuric acid, (ii) a mist filter for removal of sulphuric acid mist by collection of droplets and withdrawal of collected sulphuric acid droplets, (iii) an electrostatic precipitator for collection of liquid sulphuric acid from sulphuric acid mist, and (iv) a scrubber for removal of sulphur oxides by absorption in an alkaline solution and/or an oxidative solution with the associated benefit of providing the optimal means for reduction of SOₓ concentrations in the clean gas according to specific process requirements.

A further embodiment is configured for recycling of a stream being withdrawn downstream said first condensation unit and upstream the downstream desulphurisation unit with the associated benefit of reducing the molar flow inside the downstream desulphurisation unit.

A further embodiment involves a combustion unit for a sulphur rich material upstream said process plant in which the stream being recycled is directed to a position upstream or downstream said combustion unit, with the associated benefit of independently providing a sulphur source for the production of sulphuric acid.
Fig. 1 illustrates a process according to the prior art.
Fig. 2 illustrates a process according to an embodiment of the present disclosure involving two WSA processes in series.
Fig. 3 illustrates a process according to an embodiment of the present disclosure involving a WSA process and a scrubber process in series.
Fig. 4 illustrates a process according to an embodiment of the present disclosure in which the recycled stream is withdrawn downstream both desulphurisation processes.

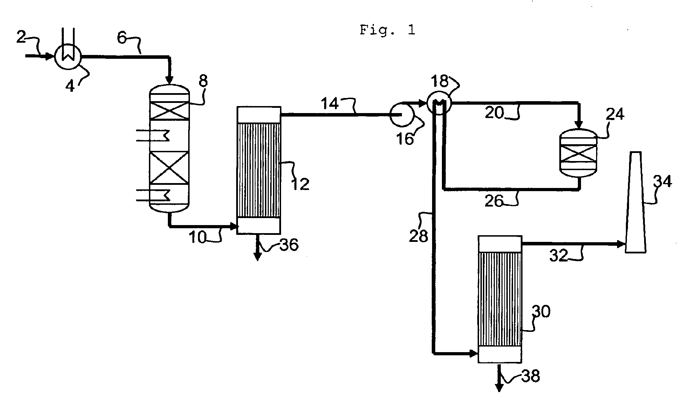

A process as shown in Fig. 1, for removal of SO₂ from process gases, with associated production of sulphuric acid is known from the prior art, and may be described as a Double Conversion/Double Condensation process. In the process a feed gas 2 containing SO₂ may optionally, by cooling or heating in an appropriate heat exchanger 4, be provided as a process gas 6 at a temperature sufficient for catalytic oxidation of SO₂ to SO₃ to be initiated such as around 370-420°C. The tempered process gas 6 is directed to a catalytic reactor 8 in which oxidation of SO₂ to SO₃ takes place in the presence of an appropriate sulphuric acid catalyst. A range of such sulphuric acid catalysts are known to the person skilled in the art. One possible catalyst is vanadium oxide supported on a silica carrier material and promoted with alkali metals. Preferred alkali metals are potassium, sodium, and/or caesium.

To avoid pushing the SO₂/SO₃ equilibrium towards SO₂ while enjoying the benefit from high reaction rates at high temperatures, the oxidation is often carried out in two or three beds with intermediate heat exchangers, and followed by a further heat exchanger.

At the outlet from the catalytic reactor a first oxidized process gas 10 is available. This first oxidized process gas contains water vapour which as temperature is reduced hydrates SO₃ to form gaseous H₂SO₄, sulphuric acid. The oxidized and partly hydrated process gas is directed to a condensation unit 12, in which the temperature is reduced to below the dew point of sulphuric acid. The sulphuric acid condenses and may be collected in concentrated form at the bottom of the condensation unit 36. At the top outlet of the condensation unit a desulphurised process gas 14 is directed downstream to a further catalytic reactor 24 where most of the remaining SO₂ is oxidized, forming a second oxidized process gas 26, which undergoes a similar condensation process in 30, before it is directed to the stack 34 as a clean gas 32.

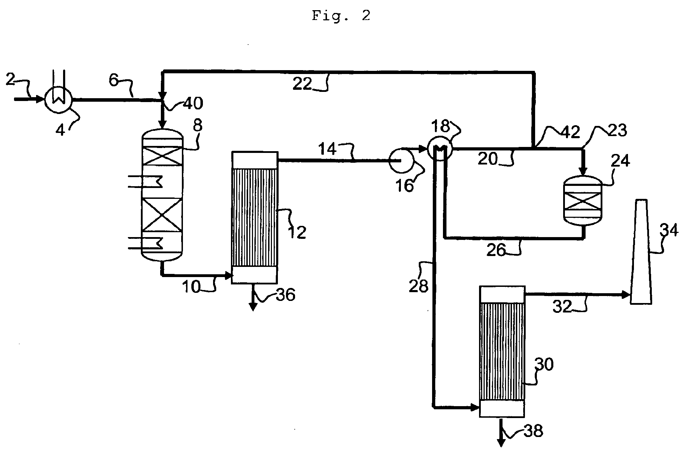

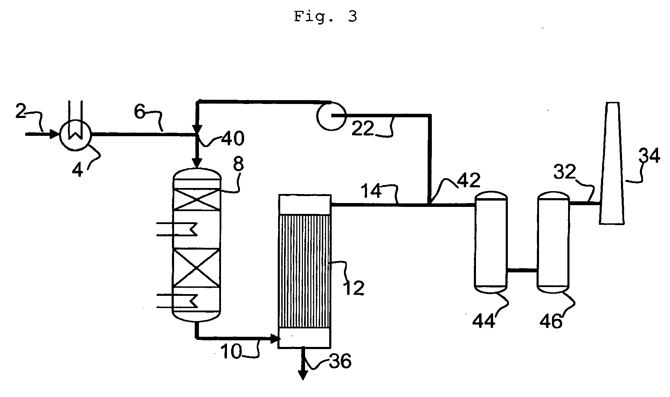

Now according to the present disclosure with reference to Fig. 2 and Fig. 3, it is desired to keep the oxidised process gas 10 above the sulphuric acid dew point, while ensuring a high level of sulphur removal and reducing the size of equipment. This is obtained by keeping the concentration of sulphur oxides low, by dilution of the feed gas 6 with a first recycle stream 22 of desulphurised process gas in a mixing point 40. The molar flow of the recycle stream 22 is about the same as the amount of excess air according to the prior art, and therefore overall conditions, including the concentration of SO₃ and H₂SO₄ in the first oxidized process gas 10 of this embodiment, are equivalent to those of the prior art. The reduced molar flow of desulphurised process gas 23, downstream the withdrawal point 42 now constitutes a secondary process gas, which may be desulphurised further in a downstream desulphurisation process.

In a preferred embodiment illustrated in Fig. 2, the downstream desulphurisation process is a second WSA process configured for removal of a low level of sulphur oxides comprising a catalytic reactor 24 and a condenser 30. This downstream desulphurisation process may be significantly smaller than the upstream desulphurisation process, since the molar flow is much lower due to the withdrawal of the recycle stream 22.

In an alternative embodiment illustrated in Fig. 3, the first WSA Process is followed by an alternative process for removal of low concentrations of sulphur oxides, such as a scrubber 44,46 for collection of sulphur oxides in either sodium hydroxide or hydrogen peroxide.

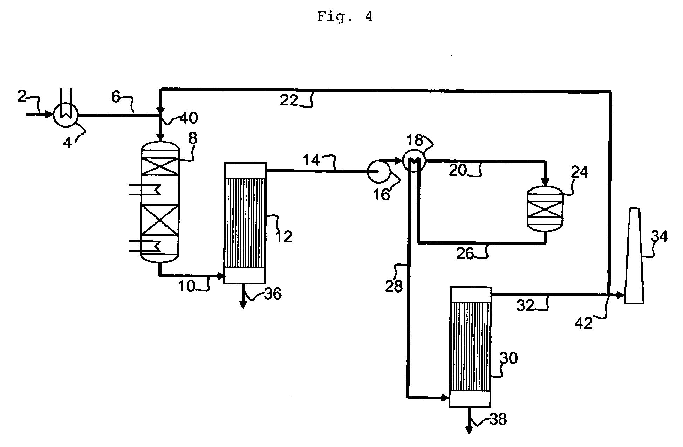

In a further embodiment illustrated in Fig. 4, the withdrawal point may be positioned downstream the downstream desulphurisation process. In this case a large molar flow will be present in both desulphuration processes, but a reduced molar flow will be present upstream the first desulphurisation. This embodiment may be especially suited for sulphuric acid production by combustion of a sulphur source, as the sulphur combustor can be reduced in size, compared to the prior art.

The addition of the recycle stream in the mixing point 40 may require careful mixing to avoid pockets of condensing conditions, where corrosion may take place. This may beneficially be implemented by an appropriate gas mixer such as disclosed in WO2011/101038.

In a further embodiment the process may also include a combustor receiving a sulphur rich feed, comprising e.g. hydrogen sulphide, spent acid, or sulphur, and the recycle stream may be added to the feed gas upstream this combustor. Such addition upstream a sulphur combustor shall be considered equivalent to the addition of a recycle stream downstream said sulphur combustor.

### EXAMPLES

In order to evaluate embodiments of the prior art and embodiments of the present disclosure, performance and design parameters has been evaluated for 3 sulphuric acid processes designed for production of 600 metric ton sulphuric acid per day (calculated as 100% H₂SO₄). The processes produce 98% (w/w) H₂SO₄, with a SO₂ conversion of 99.83%. Outside the desulphurisation plant steam may be converted into electrical power. For the process the feed is 100% H₂S gas and the ambient conditions are pressure 1001 mbar abs at 25°C, 65% RH.

### Example 1

The process unit is designed according to Fig. 1, i.e. Double Conversion/Double Condensation. The following process steps apply with reference to elements of Fig. 1:

| Combustion | (not shown) |
|---|---|
| Cooling | (4) |
| 1^{st} Conversion and Cooling | (8) |
| 1^{st} Condensation and acid withdrawal | (12, 36) |
| Reheating | (18) |
| 2^{nd} Conversion and Cooling | (24, 18) |
| 2^{nd} Condensation and acid withdrawal | (30, 38) |
| Clean Gas to stack | (34) |

From the data in Table 1, it can be seen that the unit is performing according to the performance requirements with a clean gas flow of 73500 Nm³/h.

### Example 2

The process unit is designed as a Double Conversion Double Condensation unit according to an embodiment of the present disclosure, i.e. desulphurised process gas is recycled downstream reheating 18 to upstream the SO₂ converter 8 according to Fig. 2.

| Combustion | (not shown) |
|---|---|
| Cooling | (4) |
| Mixing process gas with recycle gas | (6,22,40) |
| 1^{st} Conversion and Cooling | (8) |
| 1^{st} Condensation and acid withdrawal | (12, 36) |
| Reheating | (18) |
| Withdrawal of recycle gas | (22,42) |
| 2^{nd} Conversion and Cooling | (24,18) |
| 2^{nd} Condensation and acid withdrawal | (30,38) |
| Clean Gas to stack | (34) |

From Table 1 it is evident that the sulphur emission is as low as for the prior art process of Example 1. In addition, the process gas molar flow before the recycle gas mixing point 40 and after the recycle gas withdrawal point 42 have been reduced by more than 20% to a clean gas flow of 56500 Nm³/h resulting in a smaller and more cost efficient layout.

### Example 3

The process unit is designed according to Fig. 3 as a Single Conversion Single Condensation unit with a quenching unit 44 and a hydrogen peroxide tail gas scrubber 46 and process gas recycle.

| Combustion | (not shown) |
|---|---|
| Cooling | (4) |
| Mixing process gas with recycle gas | (6,22,40) |
| 1^{st} Conversion and Cooling | (8) |
| 1^{st} Condensation and acid withdrawal | (12, 36) |
| Withdrawal of recycle gas | (42) |
| Process gas cooling (Quench) | (44) |
| Process gas scrubbing | (46) |

From Table 1 it can be seen that performance is good according to the specification and that it is possible to reduce the molar flow about 20% outside the recycle loop 42,22,40 again resulting in a more cost efficient unit than if constructed according to prior art.

**Table 1**

| | Example 1 no recirculation | Example 2 recirculation | Example 3 Single conversion, recirculation & scrubber | Unit |
|---|---|---|---|---|
| Feed Flow | 5731 | 5731 | 5731 | Nm3/h |
| Combustion Air | 85600 | 68600 (-20%) | 71000 (-17%) | Nm3/h |
| PG before recycle | 88400 | 71400 (-19%) | 74400 (-16%) | Nm3/h |
| PG inlet SO₂ converter | 88400 | 88600 (0%) | 92100 (+4%) | Nm3/h |
| Recycle | 0 | 17100 | 17700 | Nm3/h |
| Process gas after recycle | 74400 | 57400 (-23%) | 59400 (-20%) | Nm3/h |
| Clean Gas | 73500 | 56500 (-23%) | 61700 (-17%) | Nm3/h |
| Power production | 13.3 | 13.6 (+2.5%) | 13.7 (+3.0%) | MW |
| Sulphur in clean gas as SO₂ | 50 | 50 | 50 | kg/h |
| SO₂ removal | 99.83 | 99.83 | 99.83 | % |

## Claims

1. A process for oxidation of SO₂ to SO₃ comprising the steps of
(a) directing a stream of feed gas comprising SO₂ and O₂, to a catalytically active material
(b) oxidizing an amount of said SO₂ in said process gas to SO₃
in the presence of at least 0.1% water and the catalytically active material,
providing a first oxidized process gas
(c) reacting SO₃ with water in a condensing column,
(d) condensing H₂SO₄ in a condenser
(e) withdrawing a first desulphurized process gas and a first stream of sulphuric acid
(f) from the desulphurized process gas withdrawing a recycle stream of desulphurized process gas wherein the recycle stream is added to said stream of feed gas or said first oxidized process gas.

2. A process according to claim 1 further comprising the secondary sulphur removal process step of
(g) reheating the first desulphurized process gas,
(h) oxidizing an amount of the remaining SO₂ in said first desulphurized process gas to SO₃ in the presence of
a second catalytically active material
providing a second oxidized process gas
(i) reacting SO₃ with water,
(j) condensing H₂SO₄
(k) and withdrawing a second desulphurized process gas and a second stream of sulphuric acid

3. A process according to claim 1 or 2 further comprising the process step of
(1) heating the recycle stream of desulphurized process gas to a temperature above the dew point of sulphuric acid in the desulphurized flue gas, such as at least 10°C, preferably at least 30°C and even more preferable at least 50°C above the dew point with respect to sulphuric acid in said recycle stream.

4. A process according to claim 1 to 3 further comprising one or more secondary sulphur removal process steps taken from the group consisting of
(m) removal of sulphuric acid mist by collection of droplets in a mist filter and withdrawal of collected sulphuric acid droplets,
(n) removal of sulphuric acid mist by electrostatic precipitation, and removal of precipitated sulphuric acid
(o) removal of sulphur oxides by absorption in a scrubber, wherein said scrubber contains an alkaline solution and/or an oxidative solution.

5. A process according to claim 2 to 4, wherein the recycle stream is withdrawn downstream the secondary sulphur removal process step.

6. A process according to claim 2 to 4, wherein the recycle stream is withdrawn upstream the secondary sulphur removal process step.

7. A process according to claim 1 to 6, wherein the concentration of SO₂ in the feed gas is above 5 % vol, and below 100% vol, preferably below 30% vol.

8. A process according to claim 1 to 7 in which at least 99% of the sulfur comprised in the feed gas is in oxidised form such as SO₂ or SO₃ or the corresponding acids.

9. A process according to claim 1 to 8 in which less than 50% of said desulphurized process gas is withdrawn as a recycle stream of desulphurized process gas.

10. A process according to claim 1 to 9 in which the volumetric concentration of oxygen in said process gas being directed to contact the catalytically active material is at least the same as the volumetric concentration of sulphur dioxide.

11. A process according to claim 1 to 10 in which the temperature of said recycled gas is above 200°C.

12. A process plant for desulphurisation of a feed gas said process plant comprising
a first bed of catalytically active material,
a first condensation unit and a downstream desulphurisation unit, configured for recycling of a stream being withdrawn downstream said first condensation unit and optionally downstream the downstream desulphurisation unit, and being recycled to a process position upstream the first condensation unit, and optionally upstream said first bed of catalytically active material.

13. A process plant according to claim 12, in which said downstream desulphurization unit is taken from the group consisting of (i) a process unit comprising a catalytic material for oxidation of SO₂ to SO₃ and a condenser for condensation of sulphuric acid, (ii) a mist filter for removal of sulphuric acid mist by collection of droplets and withdrawal of collected sulphuric acid droplets, (iii) an electrostatic precipitator, for collection of liquid sulphuric acid from sulphuric acid mist, and (iv) a scrubber for removal of sulphur oxides by absorption in an alkaline solution and/or an oxidative solution.

14. A process plant for desulphurisation of a feed gas according to claim 12 or 13, configured for recycling of a stream being withdrawn downstream said first condensation unit, and upstream the downstream desulphurisation unit.

15. A process plant for production of sulphuric acid comprising a combustion unit for a sulphur rich material upstream a desulphurisation process plant according to claim 12, 13 or 14, in which the stream being recycled is directed to a position upstream or downstream said combustion unit.

## Patentansprüche

1. Verfahren zur Oxidation von SO₂ zu SO₃, umfassend die Schritte
(a) Leiten eines Einsatzgasstroms, umfassend SO₂ und O₂, zu einem katalytisch aktiven Material
(b) Oxidieren einer Menge von SO₂ im Prozessgas zu SO₃
in Gegenwart von mindestens 0,1% Wasser und des katalytisch aktiven Materials, Bereitstellen eines ersten oxidierten Prozessgases
(c) Umsetzen von SO₃ mit Wasser in einer Kondensationskolonne,
(d) Kondensieren von H₂SO₄ in einem Kondensator
(e) Abführen eines ersten entschwefelten Prozessgases
und eines ersten Schwefelsäurestroms
(f) Abführen eines Rückführstroms des entschwefelten Prozessgases aus dem entschwefelten Prozessgas
wobei der Rückführstrom dem Einsatzgasstrom oder dem ersten oxidierten Prozessgas zugefügt wird.

2. Verfahren gemäß Anspruch 1, weiterhin umfassend den sekundären Schwefelentfernungsverfahrensschritt
(g) Wiedererwärmen des ersten entschwefelten Prozessgases,
(h) Oxidieren einer Menge des im ersten entschwefelten Prozessgas verbliebenen SO₂ zu SO₃ in Anwesenheit eines zweiten katalytisch aktiven Materials Bereitstellen eines zweiten oxidierten Prozessgases
(i) Umsetzen von SO₃ mit Wasser,
(j) Kondensieren von H₂SO₄
(k) und Abführen eines zweiten entschwefelten Prozessgases und eines zweiten Schwefelsäurestroms

3. Verfahren gemäß Anspruch 1 oder 2, weiterhin umfassend den Verfahrensschritt
(I) Erwärmen des Rückführstroms des entschwefelten Prozessgases auf eine Temperatur über dem Taupunkt der Schwefelsäure im entschwefelten Rauchgas, wie mindestens 10 °C, bevorzugt mindestens 30 °C und besonders bevorzugt mindestens 50 °C über dem Taupunkt der Schwefelsäure im genannten Rückführstrom.

4. Verfahren gemäß Anspruch 1 bis 3, weiterhin umfassend einen oder mehrere sekundäre Schwefelentfernungsprozessschritte ausgewählt aus der Gruppe bestehend aus
(m) Entfernen von Schwefelsäurenebel durch Sammeln von Tröpfchen in einem Nebelabscheider und Abführen der gesammelten Schwefelsäuretröpfchen,
(n) Entfernen von Schwefelsäurenebel durch elektrostatisches Abscheiden und Entfernen der abgeschiedenen Schwefelsäure
(o) Entfernen von Schwefeloxiden durch Absorption in einem Wäscher, wobei der Wäscher eine alkalischen Lösung und/oder eine oxidierende Lösung enthält.

5. Verfahren gemäß Anspruch 2 bis 4, wobei der Rückführstrom stromabwärts des sekundären Schwefelentfernungsprozessschritts abgeführt wird.

6. Verfahren gemäß Anspruch 2 bis 4, wobei der Rückführstrom stromaufwärts des sekundären Schwefelentfernungsprozessschrittes abgeführt wird.

7. Verfahren gemäß Anspruch 1 bis 6, wobei die Konzentration von SO₂ im Einsatzgas mehr als 5 Vol.-% und weniger als 100 Vol.-%, bevorzugt weniger als 30 Vol.-%, beträgt.

8. Verfahren gemäß Anspruch 1 bis 7, wobei mindestens 99% des im Einsatzgas enthaltenen Schwefels in oxidierter Form wie SO₂ oder SO₃ oder als entsprechende Säuren vorliegen.

9. Verfahren gemäß Anspruch 1 bis 8, wobei weniger als 50% des entschwefelten Prozessgases als Rückführstrom des entschwefelten Prozessgases abgeführt werden.

10. Verfahren gemäß Ansprüchen 1 bis 9, wobei die Volumenkonzentration von Sauerstoff in dem Prozessgas für das Inkontaktbringen mit dem katalytisch aktiven Material mindestens die gleiche Volumenkonzentration wie die von Schwefeldioxid ist.

11. Verfahren gemäß Anspruch 1 bis 10, wobei die Temperatur des Rückführgases mehr als 200 °C beträgt.

12. Verfahrenstechnische Anlage zur Entschwefelung eines Einsatzgases, wobei die verfahrenstechnische Anlage umfasst:
ein erstes Bett von katalytisch aktivem Material,
eine erste Kondensationseinheit und eine nachgeschaltete
Entschwefelungseinheit, die zum Rückführen eines Stroms, der stromabwärts der ersten Kondensationseinheit und gegebenenfalls stromabwärts der nachgeschalteten Entschwefelungseinheit abgezogen wird und an einer Verfahrensposition stromaufwärts der ersten Kondensationseinheit und
gegebenenfalls stromaufwärts des ersten Bettes von katalytisch aktivem Material zurückgeführt wird, eingerichtet ist.

13. Verfahrenstechnische Anlage gemäß Anspruch 12, wobei die nachgeschaltete Entschwefelungseinheit ausgewählt ist aus der Gruppe bestehend aus (i) einer Prozesseinheit, umfassend ein katalytisches Material für die Oxidation von SO₂ zu SO₃ und einen Kondensator zum Kondensieren von Schwefelsäure, (ii) einen Nebelabscheider zur Entfernung von Schwefelsäurenebel durch Sammlung von Tröpfchen und Abführen der gesammelten Schwefelsäuretröpfchen, (iii) einen elektrostatischen Abscheider, zum Sammeln von flüssiger Schwefelsäure aus Schwefelsäurenebel, und (iv) einem Wäscher zur Entfernung von Schwefeloxiden durch Absorption in einer alkalischen Lösungen und/oder in einer oxidierenden Lösung.

14. Verfahrenstechnische Anlage zur Entschwefelung eines Einsatzgases gemäß Anspruch 12 oder 13, die zum Rückführen eines Stroms, welcher stromabwärts der ersten Kondensationseinheit und stromaufwärts der nachgeschalteten Entschwefelungseinheit abgezogen wird, eingerichtet ist.

15. Verfahrenstechnische Anlage zur Herstellung von Schwefelsäure, umfassend eine Verbrennungseinheit für schwefelreiches Material stromaufwärts einer Entschwefelungsprozessanlage gemäß Anspruch 12, 13 oder 14, wobei der zurückgeführte Strom an einer Position stromaufwärts oder stromabwärts der Verbrennungseinheit zurückgeführt wird.

## Revendications

1. Procédé pour l'oxydation de SO₂ en SO₃, comprenant les étapes consistant à
(a) diriger un courant de gaz d'alimentation comprenant du SO₂ et de l'O₂, vers un matériau catalytiquement actif
(b) oxyder une quantité dudit SO₂ dans ledit gaz de procédé en SO₃ en présence d'au moins 0,1 % d'eau et du matériau catalytiquement actif, fournissant un premier gaz de procédé oxydé
(c) faire réagir le SO₃ avec de l'eau dans une colonne de condensation,
(d) condenser l'H₂SO₄ dans un condenseur
(e) prélever un premier gaz de procédé désulfuré et un premier courant d'acide sulfurique
(f) à partir du gaz de procédé désulfuré, prélever un courant de recyclage de gaz de procédé désulfuré dans lequel le courant de recyclage est ajouté audit courant de gaz d'alimentation ou audit premier gaz de procédé oxydé.

2. Procédé selon la revendication 1, comprenant en outre l'étape de procédé secondaire d'élimination du soufre consistant à
(g) réchauffer le premier gaz de procédé désulfuré,
(h) oxyder une quantité du SO₂ restant dans ledit premier gaz de procédé désulfuré en SO₃ en présence d'un deuxième matériau catalytiquement actif, fournissant un deuxième gaz de procédé oxydé
(i) faire réagir le SO₃ avec de l'eau,
(j) condenser l'H₂SO₄
(k) et prélever un deuxième gaz de procédé désulfuré et un deuxième courant d'acide sulfurique.

3. Procédé selon la revendication 1 ou 2, comprenant en outre l'étape de procédé consistant à
(I) chauffer le courant de recyclage de gaz de procédé désulfuré à une température supérieure au point de rosée de l'acide sulfurique dans le gaz de combustion désulfuré, tel qu'au moins 10 °C, de préférence au moins 30 °C et encore plus préférablement au moins 50 °C au-dessus du point de rosée en ce qui concerne l'acide sulfurique dans ledit courant de recyclage.

4. Procédé selon les revendications 1 à 3, comprenant en outre une ou plusieurs étapes de procédé secondaires d'élimination du soufre prises dans le groupe constitué par
(m) l'élimination du brouillard d'acide sulfurique par le recueil des gouttelettes dans un filtre de brouillard et le retrait des gouttelettes d'acide sulfurique recueillies,
(n) l'élimination du brouillard d'acide sulfurique par précipitation électrostatique, et l'élimination de l'acide sulfurique précipité
(o) l'élimination des oxydes de soufre par absorption dans un épurateur, dans lequel ledit épurateur contient une solution alcaline et/ou une solution oxydante.

5. Procédé selon les revendications 2 à 4, dans lequel le courant de recyclage est prélevé en aval de l'étape de procédé secondaire d'élimination du soufre.

6. Procédé selon les revendications 2 à 4, dans lequel le courant de recyclage est prélevé en amont de l'étape de procédé secondaire d'élimination du soufre.

7. Procédé selon les revendications 1 à 6, dans lequel la concentration de SO₂ dans le gaz d'alimentation est supérieure à 5 % en volume et inférieure à 100 % en volume, de préférence inférieure à 30 % en volume.

8. Procédé selon les revendications 1 à 7, dans lequel au moins 99 % du soufre compris dans le gaz d'alimentation est sous une forme oxydée telle que le SO₂ ou le SO₃ ou les acides correspondants.

9. Procédé selon les revendications 1 à 8, dans lequel moins de 50 % dudit gaz de procédé désulfuré est prélevé sous la forme d'un courant de recyclage de gaz de procédé désulfuré.

10. Procédé selon les revendications 1 à 9, dans lequel la concentration volumique d'oxygène dans ledit gaz de procédé étant dirigé pour entrer au contact du matériau catalytiquement actif est au moins identique à la concentration volumique du dioxyde de soufre.

11. Procédé selon les revendications 1 à 10, dans lequel la température dudit gaz recyclé est supérieure à 200 °C.

12. Installation de transformation pour la désulfuration d'un gaz d'alimentation, ladite installation de transformation comprenant
un premier lit de matériau catalytiquement actif,
une première unité de condensation et une unité de désulfuration en aval, conçues pour le recyclage d'un courant étant prélevé en aval de ladite première unité de condensation et éventuellement en aval de l'unité de désulfuration en aval, et étant recyclé vers une position de processus en amont de la première unité de condensation, et éventuellement en amont dudit premier lit de matériau catalytiquement actif.

13. Installation de transformation selon la revendication 12, dans laquelle ladite unité de désulfuration en aval est prise dans le groupe constitué par (i) une unité de transformation comprenant un matériau catalytique pour l'oxydation du SO₂ en SO₃ et un condenseur pour la condensation de l'acide sulfurique, (ii) un filtre de brouillard pour l'élimination du brouillard d'acide sulfurique par le recueil de gouttelettes et le retrait des gouttelettes d'acide sulfurique recueillies, (iii) un dispositif de précipitation électrostatique, pour le recueil de l'acide sulfurique liquide à partir du brouillard d'acide sulfurique, et (iv) un épurateur pour l'élimination des oxydes de soufre par absorption dans une solution alcaline et/ou une solution oxydante.

14. Installation de transformation pour la désulfuration d'un gaz d'alimentation selon la revendication 12 ou 13, conçue pour le recyclage d'un courant étant prélevé en aval de ladite première unité de condensation, et en amont de l'unité de désulfuration en aval.

15. Installation de transformation pour la production d'acide sulfurique comprenant une unité de combustion pour un matériau riche en soufre en amont d'une installation de transformation par désulfuration selon la revendication 12, 13 ou 14, dans laquelle le courant étant recyclé est dirigé vers une position en amont ou en aval de ladite unité de combustion.
